# EUROPEAN PATENT SPECIFICATION

(11) **EP 0 606 298 B1**
(45) Date of publication and mention of the grant of the patent: **28.05.1997**
(21) Application number: 92920328.9
(22) Date of filing: 01.10.1992
(51) Int. Cl.: C08L 95/00, E04B 5/10, B32B 11/04

(54) **LOW TEMPERATURE APPLICABLE WATERPROOFING LAMINATES**
BEI TIEFER TEMPERATUR ANWENDBARE; WASSERFEST MACHENDE SCHICHTSTOFFE
STRATIFIES UTILISES POUR L'IMPERMEABILISATION ET POUVANT ETRE APPLIQUES A BASSE TEMPERATURE

(30) Priority: 01.10.1991 GB 9120929
(43) Date of publication of application: 20.07.1994
(73) Proprietor: W.R. GRACE LIMITED, London NW10 7UH (GB)
(72) Inventor: MARTIN, Timothy, John, Loxwood West Sussex RH14 0QW (GB); CAIN, David, Charles, Hillingdon Middlesex UB10 9EJ (GB); GILLANDERS, Andrew, Macrae, Wokingham Berkshire RG11 4UA (GB)
(74) Representative: Bentham, Stephen
(86) International application number: GB9201803
(87) International publication number: WO9307220

(56) References cited:
- EP-A- 0 378 371
- EP-A- 0 422 932
- FR-A- 1 318 777
- US-A- 4 248 926

## Description

This invention relates to methods for waterproofing or dampproofing various water-penetrable construction materials in which improved, pre-formed, flexible sheet-like water-proofing laminates are applied to structures at temperatures below about 5°C. Included in this invention are improved, pre-formed, flexible sheet-like water-proofing laminates which are applicable to various buildings and other civil engineering structures at temperatures below 5°C.

Various materials used in building construction and other civil engineering projects such as roads, bridges, buildings, foundations, and plaza decks are susceptible to water penetration resulting, in part, from their inherent properties. Reducing or eliminating water penetration through structures formed of these materials often is desirable and may be critical in certain structures such as those housing sensitive electronic equipment or tunnels moving vehicular or pedestrian traffic under bodies of water. For many years, flexible, sheet-like waterproofing laminates of support films and bituminous layers pre-formed in a factory have been employed as waterproofing agents.

Although pre-formed, flexible sheet-like waterproofing laminates of support films and bituminous layers have been used for many years, use of these laminates continues to be limited by the widely recognized but unmet need for laminates which can be applied confidently at cold temperatures. Thus, when ambient temperatures fall below about 5°C, particularly below -4°C, application of waterproofing laminates generally is abandoned and replaced by hot applied waterproofing agents. Weak lap adhesion, ie, laminate to laminate adhesion at joints between laminate sections, and laminate to substrate adhesion are both factors restricting low temperature application. Even specialized laminates recommended for application at temperatures below 5°C are not applied at temperatures below -4°C because of weak lap adhesion.

Currently there are available waterproofing laminates recommended for application down to -4°C. These products include a polyethylene layer and a bituminous layer including bitumen, process oil, rubber and filler.

EP-A- 0 378 371 and EP-A-0 378 372 describe waterproofing laminates which comprise a bituminous layer in which the bituminous component comprises 29-54% asphalt, 25-50% process oil and 16-35% of a thermoplastic block polymer of styrene and butadiene.

US Patent 4547399 describes a composition useful for sealing cracks and joints in roadways. The composition comprises paving grade asphalt, process oil (not over 32%) and styrene - butadiene rubber or rubbers. The styrene - butadiene rubber is a random copolymer of styrene and butadiene. The sealing composition when melted is poured into cracks or holes to fill them. When cooled to ambient temperature the composition has "non tracking" properties, ie after solidification of the composition the tyres of vehicles have been found to have little tendency to pick up the composition and deposit it adjacent the joint. This lack of tracking is apparently due to a lack of tackiness after cooling, resulting from the consistency and rubberiness of the composition when cool.

This lack of tackiness would render such a composition useless in a self-adhesive waterproofing laminate which must, of necessity, be tacky in order to provide good adhesion to a structure to be waterproofed and, and furthermore, good lap adhesion.

The disclosure of US 4547399 is therefore to the effect that a composition comprising paving grade asphalt, process oil in an amount not exceeding 32% by weight of the total ingredients and a random copolymer of styrene and butadiene would have low tackiness which low tackiness is required of a composition to be used to effect repairs on roadways.

In contrast the bituminous layer of a self-adhesive waterproofing laminate must have high tackiness and that property should preferably be maintained at low ambient temperatures.

Relatively low amounts of random styrene - butadiene copolymers have been used in bituminous compositions in waterproofing laminates but such laminates have not been usable at low temperatures.

It has now been found, unexpectedly, that compositions comprising amounts of random styrene - butadiene copolymers in excess of 9% by weight of the composition can be used in association with process oil and oxidised bitumen in the amounts and relative quantities described hereinafter to provide bituminous compositions in waterproofing laminates which are useful at low temperatures yielding compositions having high tackiness and, in particular, able to form strong and enduring laminate to laminate and laminate to substrate bonds. The particular compositions of the present invention possess high tack at low temperatures whilst still maintaining other desired properties such as softening point, slump resistance and paper release properties.

The use of the random copolymer, which is not thermoplastic, leads to higher viscosity in the melted composition than corresponding amounts of block copolymer. Processing is thereby rendered more difficult.

Unexpectedly, however, it has been found that such compositions can be processed and advantageous properties may be obtained, in terms of one or more of the following features. Lower quantities of random copolymer than block copolymer can be used to obtain similar levels of performance in terms of tack and adhesion. A wider application temperature range may also be obtainable. Improved slump resistance may also be achieved.

The present invention relates to methods for waterproofing certain water-penetrable construction materials comprising-application at temperatures as low as about -18°C of improved pre-formed, flexible, sheet-like, waterproofing laminates to structures and to the laminates which also constitute a feature of the invention. The laminates according to the invention comprise a support film and bituminous layer in which the bituminous component comprises 26-62 (e.g.32-62) weight percent oxidised bitumen,21-65 (e.g.21-59) weight percent process oil, and 9-25 weight percent of a styrene butadiene rubber (SBR) random co-polymer.

Waterproofing of structures such as buildings, bridges, roads, tunnels, foundations and plaza decks using pre-formed, flexible, sheet-like laminates of film and bituminous layers requires application of numerous sections of waterproofing laminate. To provide a continuous moisture barrier, the sections are overlapped and adhered together. Optimum waterproofing thus requires bonds between sections of waterproofing laminate which endure essentially for the life of the structure. The present invention resides in the discovery of improved waterproofing laminates having a bituminous layer comprised of about 26-62% (e.g. 32-62%) by weight oxidised bitumen, about 21-65% (e.g. 21-59%) by weight process oil, and about 9 to 25% by weight of a random co-polymer of styrene and butadiene monomer (SBR). As used herein, the weight percent of oxidised bitumen, process oil, and random co-polymer of butadiene and styrene is calculated based on the total of these components not including fillers or any other components. Further, at temperatures as low as about -18°C these laminates form sufficiently strong and enduring laminate-to-laminate bonds to enable application of the improved waterproofing laminates at these low temperatures. Thus, the invented low temperature-applicable waterproofing laminates are waterproofing laminates which form sufficiently strong and enduring laminate-to-laminate bonds to make possible application of waterproofing laminates at temperatures as low as about -18°C, especially between -18°C and -4°C, most especially between -12°C and -7°C, which meet relevant construction industry specifications and standards and needs. Moreover, the invented low temperature-applicable waterproofing laminates retain sufficient high temperature creep resistance to enable application on structures where temperatures may exceed 60°C such as plaza decks of buildings in hot climates.

As used herein, waterproofing laminates are flexible, sheet-like materials comprising a bituminous layer such as bitumen, rubberized bitumen, or equivalent materials, and a support material, preferably a film of a synthetic polymer such as polyethylene, polypropylene or other polyolefin; polyamide; polyester, eg, polyethylene terephthalate, polyurethane, polyvinyl chloride; a copolymer of vinyl chloride and vinylidene chloride; synthetic rubber such a polychloroprene or butyl rubber; or other similar materials. Metal foils, eg of aluminium, may also be used. Laminated combinations comprising two or more materials may advantageously be used. Preferably, the bituminous layer is at least 0.63 mm (25 mils) thick, more preferably from 1.25-1.5 mm (50-60 mils) thick. By suitable choice of, for example, the support material, the laminates of the invention may be used to reduce or eliminate gas, eg methane or radon, penetration: the invention embraces such laminates and the method of their use. The presently invented waterproofing laminates, at temperatures as low as about -18°C, preferably are applied to structures to which previously have been applied suitable primers. Suitable primers include known waterproofing laminate primers such as compositions of bitumen cutbacks, natural or synthetic rubbers and diluent or filler resins in organic solvents. Generally primers are not applied on a laminate surface which is adhered to another laminate surface at joints between adjacent laminate sections.

The oxidised bitumen used in the invented, improved waterproofing laminates generally has the following clay separation (ASTM D2007) range and preferred ranges:

| | Range | Preferred Range |
|---|---|---|
| Saturates | 15-40% | 20-32% |
| Resins | 8-40% | 12-34% |
| Aromatics | 5-40% | 10-30% |
| Asphaltenes | 2-40% | 20-36% |

Preferred oxidised bitumens have a softening point (°C) of 80-100, most preferably 85-95, eg about 90. Materials with a penetration at 25°C of 20-45 (dmm),most preferably 32-40, eg about 35, are preferred. The test methods are, for softening point BS2000, Part 58, and for penetration BS2000, Part 49. A preferred oxidised bitumen is 85/40 grade. Other grades of oxidised bitumen may be used, for example, 105/35 or 115/15.

The process oil used in the bituminous layer of the presently invented waterproofing laminates is process oil defined as a generally aromatic, aliphatic, or aromatic-aliphatic oil.

Preferred process oils are aromatic: they preferably have an aniline point (°C) of 40-115, more preferably 60-90. Such oils with a viscosity (c St) of 31-70 are preferred. The refractive index is most preferably 1.5200-1.5600. The density (g/ml) of the oil is preferably from 0.930 to 0.965. The aniline point is determined in accordance with ASTM D611; the viscosity with ASTM D445 at 100°C; the refractive index with SMS 473 at 20°C, and the density with ASTM D1298 at 40°C.

The random co-polymer of styrene and butadiene monomers (SBR) is selected using known procedures so that the resulting bituminous layer has sufficient strength and tackiness to produce low temperature applicable waterproofing laminates. Preferred random co-polymers of styrene and butadiene monomers are those polymers having a styrene content of from 5, preferably from 24 to 35%; a butadiene:styrene ratio of about 75:25 is especially preferred.

Preferred waterproofing laminates of this invention include a bituminous layer comprising about 28 to 59 weight percent, more preferably about 40 to 55 weight percent oxidised bitumen; about 28 to 53 weight percent, more preferably about 31 to 47 weight percent process oil; and about 10-20 weight percent, more preferably about 11-18 weight percent random co-polymer of styrene and butadiene monomers.

Tackifying resins may optionally be included in the bituminous layer: suitable materials include aliphatic hydrocarbon resins, aromatic hydrocarbon resins, polyterpene resins, terpene phenolic resins and polybutene resins. When tackifying resins are included the amount is generally from 2 to 10% by weight.

Fillers are optional ingredients in the bituminous layer of the invented waterproofing laminates. Useful fillers include stone dust, lime stone, ground glass fibers, wollastonite, sand, talc, mica, vermiculite, carbon black, and titanium dioxide. Addition of fillers and various other optional ingredients, however, may reduce the ability of the invented waterproofing laminates to form sufficiently strong and durable lap bonds at joints between sections of laminate when applied at selected temperatures below 5°C. Thus, the types and amounts of fillers are selected so that the waterproofing laminate forms sufficiently strong and durable lap bonds and bonds to substrates when applied at temperatures as low as about - 18°C as determined by the testing procedure described below. Compositions without fillers are particularly preferred.

A presently preferred composition for the bituminous layer of waterproofing laminates for low temperature application comprises about 50 weight percent oxidised bitumen, about 33 weight percent process oil, about 17 weight percent styrene butadiene rubber random co-polymer.

Various civil engineering structures including, for example, buildings, bridges, roads, tunnels, foundations and plaza decks are made waterproof using the present invention. As used herein, making a structure "waterproof" means reducing or eliminating the ability of water to penetrate the structure. The presently invented waterproofing laminates are used to make waterproof structures constructed of materials which are water-penetrable either inherently or as a result of imperfections such as cracks or pores. The types of water-penetrable materials with which the present invention is used include wood, brick, stone, exterior gypsum board, blended cements, pozzolanic cements or concrete, preferably Portland cement concrete.

The presently invented waterproofing laminates are preferably prepared according to the following general procedure. The SBR random co-polymer is preferably used in latex form but solid polymer may also be employed. When the preferred latex form is used the latex and process oil are generally blended at about 70°C. The oxidised bitumen at a temperature of, preferably, 160-170°C is then added to the blend with heating, preferably to maintain a temperature of about 150°C. Mixing must be adequate to ensure full dispersion. Too high a shear in the mixing should be avoided to minimise the risk of degradation of the material by mechanical degradation of the polymer content. This polymer-oil-oxidised bitumen composition then is poured onto release paper and laminated with a support film.

According to the presently invented methods for waterproofing structures wherein the invented waterproofing laminates are applied at temperatures as low as about - 18°C, preferably between -18°C and -4°C, more preferably between -12°C and -7°C, the waterproofing laminate is applied to the structure with pressure and pressure is applied to form lap bonds. Under adverse conditions, for example at low temperatures pressure greater than hand pressure, for example, using a roller, may be used. In preferred methods the invented waterproofing laminates are applied to vertical aspects of structures. In other preferred methods the waterproofing laminates are applied to horizontal aspects of structures. Generally, at joints between laminate sections the bituminous layer of one section is affixed to the support film of an adjacent section. Optionally, at joints the support film is removed from the underlying laminate section so that the bituminous layer of the overlying laminate section is adhered directly to the bituminous layer of the underlying laminate section. At joints an overlap width of at least 50 mm is preferred. Primers such as mentioned about can be used to form lap bonds, but primerless formation of lap bonds is preferred.

As used in the invented methods, application of waterproofing laminates at temperatures as low as about - 18°C, preferably between about -18°C and -4°C, more preferably between about -12°C and -7°C, results in laminate-to-laminate bonds that are sufficiently strong and enduring to prevent entry of water along the waterproofing laminate section lap edges essentially for the life of the structure.

The present invention includes low temperature-applicable waterproofing laminates having a bituminous layer and a support material wherein a portion of the bituminous layer is impregnated into the support material.

The following Examples illustrate the invention:

### EXAMPLE 1

Process oil (82.5 g) having an aniline point of 83°C and oxidised bitumen (67.5 g) having a softening point of 84°C and a penetration value of 33 dmm were heated in an aluminium can in a heating block until mobile, thoroughly mixed, and allowed to cool to below 100°C. SBR latex (29.7 g dry equivalent) was added with thorough mixing, and the can replaced in the heating block set to 160°C. The mixture was continuously stirred by hand using a spatula until all the water originally present in the latex had evaporated, at which point stirring was reduced to a duration of one minute in every ten for two hours. The mixture was then poured out onto release paper, and when cool enough for ease of handling was pressed out at 105°C to a thickness of 1.3 mm, and laminated with a polyethylene backing film.

### EXAMPLE 2

To a horizontal mixer of capacity 10 tonnes was added 3334 kg of process oil having an aniline point of 83°C and 924 kg of SBR latex through a blender. The mixer blades were started, heating of the mix commenced, and 1800 kg of oxidised bitumen of softening point 84°C and a penetration value of 33 dmm was added. When all the water originally present in the latex had evaporated, and the mix temperature had attained 130°C a further 1000 kg of the same oxidised bitumen was added. Once the mix temperature had reached 155°C this temperature was maintained for one hour, and continued to be maintained while the material was pumped to storage. Following storage overnight at 145°C the material was processed to produce a 1.3 mm thickness laminated with a polyethylene film.

### EXAMPLE 3

### Adhesion testing at -10°C

The adhesion at -10°C for the samples produced in Examples 1 and 2 above was determined.

The samples to be tested were stored at -10°C for at least 16 hours to ensure that they had cooled to the test temperature. Strips were cut from each sample 25mm by 150mm, the release paper removed, and the first 100mm of the strips adhered to a horizontal substrate formed from the laminated sample adhered to a concrete slab. The remaining portion of the test strip was held in a roller grip, and peeled back at 180° to itself at 300 mm/min to determine the peel force. This peel force was used to calculate the adhesion in N/mm, and these values are quoted in Table 1. The Control refers to an existing commercial self-adhesive laminate having a polymer modified bitumen adhesive layer containing bitumen and SBS thermoplastic polymer.

**TABLE 1**

| Sample | Adhesion (N/mm) |
|---|---|
| Example 1 | 0.5 |
| Example 2 | 0.6 |
| Control | 0 |

### EXAMPLE 4

### Determination of Paper Release Temperature

The maximum temperature for release of the release paper layer in the laminates produced in Examples 1 and 2 above was determined. Portions were cut from the samples and held in a fan assisted oven for sufficient time for the samples to attain the test temperature, at which point an attempt was made to remove the paper, the sample being held within the oven to prevent undue cooling. The temperature of the oven was increased at 1°C intervals and a fresh sample tested until the paper could no longer be removed. The results obtained are given in Table 2 and confirm satisfactory release properties.

**TABLE 2**

| Sample | Release Temperature (°C) |
|---|---|
| Example 1 | 80 |
| Example 2 | 45 |

## Claims

1. A waterproofing laminate which comprises a support film and a layer of a bituminous component which comprises 26 to 62 weight percent oxidised bitumen, 21 to 65 weight percent process oil and 9 to 25 weight percent of a styrene butadiene rubber random copolymer.

2. A laminate according to claim 1 in which the oxidised bitumen has the following clay separation (ASTM D2007) range: saturates 15 to 40 weight percent; resins 8 to 40 weight percent; aromatics 5 to 40 weight percent; and asphaltenes 2 to 40 weight percent.

3. A laminate according to claim 2 wherein the clay separation range is: saturates 20 to 32 weight percent; resins 12 to 34 weight percent; aromatics 10 to 30 weight percent; and asphaltenes 20 to 36 weight percent.

4. A laminate according to claim 1, 2 or 3 in which the oxidised bitumen has a softening point of 80 to 100° C.

5. A laminate according to any one of the preceding claims which comprises an aromatic process oil.

6. A laminate according to any one of the preceding claims in which the process oil has an aniline point of 40 to 115° C.

7. A laminate according to any one of the preceding claims in which the styrene butadiene rubber random copolymer has a styrene content of 24 to 35 weight percent.

8. A laminate according to any one of the preceding claims in which the bituminous layer comprises 28 to 59 weight percent of oxidised bitumen; 28 to 53 weight percent process oil; and 10 to 20 weight percent random copolymer of styrene and butadiene.

9. A laminate according to any one of the preceding claims in which the bituminous layer comprises a tackifying resin.

10. A laminate according to any one of the preceding claims in which the bituminous layer comprises about 50 weight percent oxidised bitumen, about 33 weight percent process oil, about 17 weight percent styrene butadiene rubber random copolymer.

11. A method of waterproofing a structure using a waterproofing laminate according to any one of claims 1 to 10.

12. A method according to claim 11 in which the laminate is applied at a temperature between -18°C and -4°C.

13. A method for the preparation of a waterproofing laminate according to any one of claims 1 to 10 which comprises blending a styrene butadiene rubber random copolymer, process oil and oxidised bitumen and laminating the composition obtained with a support film.

## Patentansprüche

1. Wasserfestmachendes Laminat, das eine Trägerfolie und eine Schicht aus einer bituminösen Komponente umfaßt, die 26 bis 62 Gew.% oxidiertes Bitumen, 21 bis 65 Gew.% Prozeßöl und 9 bis 25 Gew.% statistisches Styrol/Butadien-Kautschukcopolymer umfaßt.

2. Laminat nach Anspruch 1, bei dem das oxidierte Bitumen den folgenden Trennbereich an Ton (ASTM D 2007) aufweist:
| | |
|---|---|
| gesättigte Verbindungen | 15 bis 40 Gew.% |
| Harze | 8 bis 40 Gew.% |
| Aromaten | 5 bis 40 Gew.% und |
| Asphaltene | 2 bis 40 Gew.%. |

3. Laminat nach Anspruch 2, bei dem der Trennbereich an Ton
| | |
|---|---|
| gesättigte Verbindungen | 20 bis 32 Gew.% |
| Harze | 12 bis 34 Gew.% |
| Aromaten | 10 bis 30 Gew.% und |
| Asphaltene | 20 bis 36 Gew.% |
ist.

4. Laminat nach Anspruch 1, 2 oder 3, bei dem das oxidierte Bitumen einen Erweichungspunkt von 80 bis 100°C hat.

5. Laminat nach einem der vorhergehenden Ansprüche, das ein aromatisches Prozeßöl umfaßt.

6. Laminat nach einem der vorhergehenden Ansprüche, bei dem das Prozeßöl einen Anilinpunkt von 40 bis 115°C hat.

7. Laminat nach einem der vorhergehenden Ansprüche, bei dem das statistische Styrol/Butadien-Kautschukcopolymer einen Styrolgehalt von 24 bis 35 Gew.% hat.

8. Laminat nach einem der vorhergehenden Ansprüche, bei dem die bituminöse Schicht 28 bis 59 Gew.% oxidiertes Bitumen, 28 bis 53 Gew.% Prozeßöl und 10 bis 20 Gew.% statistisches Copolymer aus Styrol und Butadien umfaßt.

9. Laminat nach einem der vorhergehenden Ansprüche, bei dem die bituminöse Schicht ein Klebrigmacherharz umfaßt.

10. Laminat nach einem der vorhergehenden Ansprüche, bei dem die bituminöse Schicht etwa 50 Gew.% oxidiertes Bitumen, etwa 33 Gew.% Prozeßöl und etwa 17 Gew.% Styrol/Butadien-Kautschukcopolymer umfaßt.

11. Verfahren zum Wasserfestmachen einer Baustruktur unter Verwendung eines wasserfest machenden Laminats gemäß einem der Ansprüche 1 bis 10.

12. Verfahren nach Anspruch 11, bei dem das Laminat bei einer Temperatur zwischen -18°C und -4°C aufgebracht wird.

13. Verfahren zur Herstellung eines wasserfestmachenden Laminats gemäß einem der Ansprüche 1 bis 10, bei dem ein statistisches Styrol/Butadien-Kautschukcopolymer, Prozeßöl und oxidiertes Bitumen gemischt werden und die erhaltene Zusammensetzung mit einer Trägerfolie laminiert wird.

## Revendications

1. Stratifié étanche à l'eau qui comprend un film support et une couche de constituant bitumineux qui comprend de 26 à 62% en poids de bitume oxydé, de 21 à 65% en poids d'huile industrielle et de 9 à 25% en poids d'un copolymère statistique de caoutchouc styrène-butadiène.

2. Stratifié selon la revendication 1, dans lequel le bitume oxydé possède l'intervalle suivant de séparation à l'argile (ASTM D2007) : produits saturés 15 à 40% en poids, résines 8 à 40 en poids; produits aromatiques 5 à 40% en poids; et asphaltènes 2 à 40% en poids.

3. Stratifié selon la revendication 2, dans lequel l'intervalle de séparation à l'argile est : produits saturés 20 à 32% en poids; résines 12 à 34% en poids, produits aromatiques 10 à 30% en poids; et asphaltènes 20 à 36% en poids.

4. Stratifié selon la revendication 1, 2 ou 3, dans lequel le bitume oxydé possède un point de ramollissement de 80 à 100°C.

5. Stratifié selon l'une quelconque des revendications précédentes qui comprend une huile industrielle aromatique.

6. Stratifié selon l'une quelconque des revendications précédentes dans lequel l'huile industrielle possède un point d'aniline de 40 à 115°C.

7. Stratifié selon l'une quelconque des revendications précédentes dans lequel le copolymère statistique de caoutchouc styrène-butadiène possède une teneur en styrène de 24 à 35% en poids.

8. Stratifié selon l'une quelconque des revendications précédentes dans lequel la couche bitumineuse comprend de 28 à 59% en poids de bitume oxydé; de 28 à 53% en poids d'huile industrielle; et de 10 à 20% en poids de copolymère statistique de butadiène et styrène.

9. Stratifié selon l'une quelconque des revendications précédentes dans lequel la couche bitumineuse comprend une résine collante.

10. Stratifié selon l'une quelconque des revendications précédentes dans lequel la couche bitumineuse comprend environ 50% en poids de bitume oxydé, environ 33% en poids d'huile industrielle, environ 17% en poids de copolymère statistique de caoutchouc styrène-butadiène.

11. Procédé pour rendre étanche une structure en utilisant un stratifié d'étanchéité à l'eau selon l'une quelconque des revendications 1 à 10.

12. Procédé selon la revendication 11 dans lequel le stratifié est appliqué à une température entre -18°C et -4°C.

13. Procédé pour la préparation d'un stratifié étanche à l'eau selon l'une quelconque des revendications 1 à 10 qui consiste à mélanger un copolymère statistique de caoutchouc styrène-butadiène, une huile industrielle et du bitume oxydé et à stratifier la composition obtenue avec un film support.
